# EUROPÄISCHE PATENTSCHRIFT

(11) **EP 1 455 921 B1**
(45) Veröffentlichungstag und Bekanntmachung des Hinweises auf die Patenterteilung: **26.10.2005**
(21) Anmeldenummer: 02790489.5
(22) Anmeldetag: 19.12.2002
(51) Int. Cl.: B01D 25/26, B01D 29/41, B01D 63/08

(54) **FILTERVORRICHTUNG, INSBESONDERE STAPELFILTER**
FILTERING DEVICE, PARTICULARLY STACKING FILTER
DISPOSITIF FILTRE, EN PARTICULIER FILTRE A EMPILEMENT

(30) Priorität: 21.12.2001 DE 10163609
(43) Veröffentlichungstag der Anmeldung: 15.09.2004
(73) Patentinhaber: Siteco Gmbh & Co. Kg, 55450 Langenlonsheim (DE)
(72) Erfinder: AMTMANN, Till, 55559 Bretzenheim (DE)
(74) Vertreter: Bartels, Martin Erich Arthur
(86) Internationale Anmeldenummer: PCT/EP2002/014541
(87) Internationale Veröffentlichungsnummer: WO 2003/053537

(56) Entgegenhaltungen:
- EP-A- 0 195 461
- WO-A-00/10684
- DE-A- 2 653 875
- DE-C- 749 333

## Beschreibung

Die Erfindung betrifft eine Filtervorrichtung, insbesondere Stapelfilter, mit den Merkmalen des Patentanspruches 1.

Durch die WO 00/10684 ist eine Filtervorrichtung als Filtermodul aufgebaut bekannt, das bezüglich seines Aufbaues derart vereinfacht ist, daß auch die Herstellung eines Stufenfilters möglich ist Bei der bekannten Filtermodullösung besteht jede Lage Filtermaterial aus einer Schicht aus Tiefenfiltermaterial und Abstandselemente zwischen den Filterscheiben bestehen aus drainierenden scheibenförmigen Schichten, wobei die drainierenden Scheiben und die Filterscheiberi spaltfrei aufeinandergestapelt sind. Die drainierenden Scheiben sind wechselseitig zum Filtratraum und zum Unfiltratraum abgedichtet, so daß dergestalt eine beliebige Anordnung von Filterscheiben möglich ist. Bei der bekannten Lösung strömt das Unfiltrat außenumfangsseitig in das Filtermodul ein und ein mittig im Filtermodul verlaufender Filtratkanal ist an die jeweilige Filtratseite der Filterscheiben angeschlossen. Durch die Einleitung des Unfiltrats an der Außenumfangsseite des Filtermoduls kommt es innerhalb des Stapelfilters zu scharfen Umlenkungen des Strömungsweges des zu filtrierenden Fluids, was eine gleichmäßige Einströmung in die Filtermaterialien und somit die Filtrationsleistung beeinträchtigen kann. Ferner benötigt die bekannte Lösung für das Filtermodul ein Umfassungsgehäuse, das für die Zuführung des Unfiltrats unter Einnahme eines radialen Abstandes das Filtermodul umfaßt. Aufgrund der dahingehenden Gehäuseanordnung mit Zuführraum für das Unfiltrat baut die bekannte Lösung geometrisch groß auf.

Eine weitere Filtervorrichtung in Form einer Art Stapelfilter ist durch die US-A-5,965,019 bekannt. Bei einer Ausführungsform dieser bekannten Lösung umfassen Abdichtklammern außenumfangsseitig die jeweilige Filterscheibe, so daß dergestalt in diesem Bereich die Filtratseite von der Unfiltratseite dichtend getrennt ist. Zur Zuführung des Unfiltrats an die Filterscheiben dient wiederum ein zum eigentlichen Filtermodul auf Abstand gehaltenes Gehäuse, das demgemäß gleichfalls vermehrt Bauraum benötigt. Auch hier kommt es bei der seitlichen Einleitung des Unfiltrats in die Filterscheiben zu scharfen Umlenkungen, was die Anströmwege und mithin die Filtrationsleistung beeinträchtigt. Bei der bekannten Lösung werden die Filterscheiben auf einem zentralen Dom gehalten und an diesem gelagert, der im übrigen die zentrale Kanalführung des Filtermoduls für das Filtrat ausbildet. Da der Festlegedorn als Befestigungseinrichtung den Filtratkanal durchgreift, kommt es auch insoweit beim Abströmverhalten des bekannten Filtermoduls zu einem ungünstigen Verlauf mit den bereits beschriebenen Nachteilen.

Durch die DE-A-34 41 249 ist ein Stapelfilter für Fluide bekannt, wobei sich dieser bekannte Stapelfilter für Fluide aus einzelnen übereinander angeordneten Membranzuschnitten zusammensetzt. Diese Membranzuschnitte sind von einer Randdichtung umgeben und sie enthalten Durchbrechungen, die einen Schacht für eine Trübe (Unfiltrat) bilden sowie Durchbrechungen, die einen Schacht für ein Filtrat bilden, wobei letzterer an eine Filtratführungseinrichtung zum Abführen des Filtrats angeschlossen ist. Die Filtermaterialien der Membranzuschnitte sind von einer Abdichtung derart begrenzt, daß entlang ihres Außenumfanges die Filtratseite von der Trübe dichtend getrennt ist. Bei der bekannten Lösung ist der Schacht für die Trübe, der mittig angeordnet ist, vom Verteilerschacht für das Filtrat, der außermittig an der Außenumfangsseite der Vorrichtung angeordnet ist, räumlich getrennt. Beide Schächte durchsetzen in paralleler Ausrichtung zur Längsachse der Filtervorrichtung die zugehörigen Membranzuschnitte. Aufgrund der dahingehenden Anordnung baut die bekannte Lösung konstruktiv groß auf und ist im übrigen kompliziert in der Herstellung und Wartung. Ferner hat es sich gezeigt, daß bei der bekannten Lösung die Fluidführung für das Unfiltrat sowie für das Filtrat als energetisch nicht günstig anzusehen ist.

Durch die US-A-3,516,542 ist ein gattungsfremder Stapelfilter bekannt, der mittig mit einer Verteileinrichtung versehen ist. Diese Verteileinrichtung bildet einen einzigen Kanal für die Führung des Filtrats aus der Filtervorrichtung hinaus. Ferner weist die Verteileinrichtung Ein- und Austrittsöffnungen auf und auf der diametral gegenüberliegenden Seite dieser Öffnungen ist die Verteileinrichtung mit einem geschlossenen Wandbereich dergestalt versehen, daß das außenumfangsseitig der Filtervorrichtung zugeführte Unfiltrat durch die Filterscheiben gefiltert als Filtrat in den Mittenkanal austreten kann, wobei das bereits gefilterte Medium (Filtrat) auf der gegenüberliegenden Seite und durch den genannten geschlossenen Wandbereich getrennt auf die Reinseite der Filtervorrichtung und mithin in den Kanal eingeleitet wird. Durch die Zufuhr des Unfiltrats von der Außenumfangsseite der Filtervorrichtung her ist die dahingehend bekannte Vorrichtung außenumfangsseitig nicht mit einer Abdichteinrichtung begrenzt, sondern vielmehr im wesentlichen offen gehalten, so daß bei der bekannten Lösung Zusatzeinrichtungen notwendig sind für die Unfiltratzuführung zu der eigentlichen Filtervorrichtung. Letzteres führt aber wieder zu groß aufbauenden und kostenintensiven Lösungen sowohl bei der Wartung als auch bei der Herstellung. Ferner erweist sich die dahingehende Strömungsführung von außen nach innen gleichfalls als nachteilig für die angestrebte Filtrationsleistung mit dahingehenden Vorrichtungen.

Durch die DE 26 53 875 A ist ein gattungsgemäßer Stapelfilter bekannt mit übereinander angeordneten Filterscheiben, die am Außenrand abgedichtet sind und die Filtratseite von der Unfiltratseite trennen. Ferner sind Filtrat und Unfiltratkanal vorgesehen, die parallel zur Längsachse mittig im Filter angeordnet sind und den Stapel durchgreifen. Der mittige Bereich stellt gleichzeitig eine Verteileinrichtung dar, über die das Unfiltrat in den Stapel verteilt und das Filtrat gesammelt und zentral aus dem Filter herausgeführt wird. Da die Fluidströme auf unterschiedlichen Höhen in den Stapel hinein und aus diesem heraus befördert werden, sind die gegenüberliegenden Öffnungen auf unterschiedlicher Höhe angebracht, so daß sich Öffnungen und geschlossene Wandbereiche gegenüberliegen.

Obwohl bei der bekannten Lösung die übereinander angeordneten Filterscheiben teilweise von Bestandteilen des Gehäuses mit abgedichtet sind, wird ein Teil des Hauptfluidstroms zwischen Außenumfang der Filterscheiben an ihrer abgedichteten Seite und dem Innenumfang des Gehäuses entlanggeführt. Dies führt zum einen zu einer groß aufbauenden Filtervorrichtung und zum anderen zu einer strömungstechnisch insoweit ungünstigen Lösung. Aufgrund des gewählten Aufbaues und der mittigen Fluidführung entlang des genannten zentralen Filtrat- und Unfiltratkanals sind die zum Einsatz kommenden Filterscheiben im wesentlichen unterschiedlich aufgebaut und nur bei größerer Stapelanordnung mit mehr als drei Filterscheiben lassen sich zwei als Gleichteile ausbilden. Im Hinblick auf diesen unterschiedlichen Vielschichtenaufbau an Filterscheiben ist die bekannte Lösung teuer in der Herstellung sowie in der Wartung, insbesondere wenn einzelne Filterscheiben gegen neue Elemente auszutauschen sind.

Durch die EP-A-0 195 461 ist eine Filtervorrichtung bekannt mit einer Stapelfolge an hintereinander angeordneten Filterscheiben, die in der Art von Gleichteilen ausgebildet sind. Ferner ist die notwendige Abdichteinrichtung durch die Filterscheiben selbst gebildet, so daß diese sich zwischen zwei Flanschplatten als Gehäuseteile erstrecken können, wobei die genannten beiden endseitigen Flanschplatten über Zuganker aneinandergehalten werden, die derart den Stapel an Filterscheiben dicht halten. Bei einer Ausgestaltungsform der bekannten Lösung wird das Unfiltrat einem innerhalb der Filtervorrichtung außermittig angeordneten Unfiltratkanal zugeführt, der alle in der Stapelfolge befindlichen Filterscheiben durchgreift, und von dort gelangt das Unfiltrat über eine Verteileinrichtung, die einen mittigen Filtratkanal innerhalb der Filtervorrichtung und entlang deren Längsachse verlaufend freiläßt, in Richtung eines Sammelkanals, der diametral zum Unfiltratkanal verlaufend ebenfalls außermittig die Filtervorrichtung und mithin die in Stapelfolge angeordneten Filterscheiben durchgreift, wobei der dahingehende Sammelkanal für die Weitergabe des Filtrats an den mittig angeordneten Filtratkanal dient. Die dahingehende Verteilung des Unfiltrats und die Sammlung des Filtrats ist bei allen Filterscheiben in Stapelfolge gleich ausgebildet, was zu einer großen Anzahl und Länge der Strömungswege führt. Obwohl bei der bekannten Lösung auf ein abdichtendes Außengehäuse verzichtet wird und die Abdichtung über die Filterscheiben in Stapelfolge selbst erfolgt, baut aufgrund der Dreifach-Kanalanordnung in Form von Unfiltrat-, Filtrat- und Sammelkanal die bekannte Filtervorrichtung groß auf und aufgrund der gewählten Fluidführung über die drei voneinander getrennten Kanäle sind die Strömungswege weiter verlängert, was sich wiederum ungünstig auf die Filtrationsleistung der Gesamtvorrichtung auswirkt.

Ausgehend von diesem Stand der Technik liegt der Erfindung die Aufgabe zugrunde, die bekannten Filtervorrichtungen dahingehend weiter zu verbessem, daß sie strömungstechnisch günstig ausgelegt ein hohes Maß an Filtrationsleistung gewährleisten, daß sie bezogen auf die Filtrationsleistung geometrisch klein aufbauen und daß dennoch eine stabile mechanisch belastbare Filteranordnung realisiert ist. Ferner soll eine sowohl in der Herstellung als auch in der Wartung kostengünstige Filterlösung erreicht werden. Eine dahingehende Aufgabenstellung löst eine Filtervorrichtung mit den Merkmalen des Patentanspruches 1 in seiner Gesamtheit.

Dadurch, daß gemäß dem kennzeichnenden Teil des Patentanspruches 1 die Abdichteinrichtung in der Art eines Gehäuses fluiddicht sowohl die Filterscheiben als auch die Abstände zwischen denselben begrenzt und daß in Stapelfolge die hintereinander angeordneten Filterscheiben von den Stutzscheiben voneinander getrennt als Gleichteile ausgebildet, um 180° zur Längsachse oder quer dazu gedreht fluchtend miteinander unter Bildung der Funktionseinheit angeordnet sind, wird sowohl die Zuführung des Unfiltrats als auch die Abfuhr des Filtrats in bzw. aus der Filtervorrichtung über benachbarte, zentrale Kanäle im Bereich der Mitte der Filteranordnung durchgeführt, was zu kurzen Strömungswegen mit geringen Umlenkungen führt. Auch ist das Verhältnis, von zur Verfügung stehendem Einbauraum zur aufnehmbaren wirksamen Filterfläche optimiert. Es hat sich ferner gezeigt, daß bei der dahingehenden Fluidverteilanordnung sich sehr gute Filtrationsleistungen erreichen lassen gegenüber den bekannten Lösungen, die das Unfiltrat von außen her dem Filtermodul zuführen. Durch die Integrierung von Unfiltrat- und Filtratkanal in die Filterscheibenanordnung ist darüber hinaus ein platzsparender Aufbau erreichbar, so daß bei vorgegebener Filtrationsleistung die erfindungsgemäße Filtervorrichtung deutlich kleiner aufbauen kann als die bekannten Lösungen.

Aufgrund der erfindungsgemäßen mittigen Kanalführung innerhalb des Stapelfilters kann dieser außenumfangsseitig über die Abdichteinrichtung vollständig fluiddicht gehalten werden, wobei die dahingehende Abdichteinrichtung, sei es als eigenständiges Gehäuseteil, sei es, weil sie selbst ein Teil des Gehäuses für die Filtervorrichtung bildet, eine mechanische Ausstelfung des Systems dergestalt erlaubt, daß ohne zusätzliche Festlegemittel, wie beispielsweise Aufnahmedome für die Filterscheiben, Steckbolzen od. dgl., ein hoch belastbarer Verbund in der Stapelanordnung erreichbar ist. Ferner läßt sich der dahingehende Verbund ohne zusätzliche Festlegemittel, wie dargelegt, kostengünstig und platzsparend realisieren.

Dadurch, daß gemäß dem weiteren kennzeichnenden Teil des Patentanspruches 1 in Stapelfolge die Stütz- und Filterscheiben in der beanspruchten vorgegebenen Anordnung als Gleichteile ausgebildet sind, ist es möglich, mit nur einer Art an drainierenden Stützscheiben und einer Art an Filter scheiben den gesamten Stapelfilter von der Filtrationsseite her aufzubauen. Dies erweist sich als besonders kostengünstig und erlaubt auch eine rasche Montage sowie Demontage im Wartungsfall.

Durch die Mehrfachfunktionalität und die Strömungsführung in alternierender Reihenfolge der Verteileinrichtung lassen sich mithin auf geringem Bauraum verschiedene Funktionen realisieren, wie günstige Strömungsführung, ein hohes Maß an Abdichtung der Filterscheiben zueinander sowie eine hoch belastbare, mechanische Abstützung des Gesamt-Stapelpaketes an Filterscheiben innerhalb der Filtervorrichtung.

Bei einer bevorzugten Ausführungsform der erfindungsgemäßen Filtervorrichtung sind die einzelnen Filterscheiben zu einer Funktionseinheit mit vorgebbarer Filtrationsleistung zusammengefaßt, wobei der jeweilige Filtrat-und der Unfiltratkanal die Funktionseinheit in mindestens zwei verschiedene Funktionsbereiche aufteilen, von denen einer der Verteilung des Unfiltrats an die Filterscheiben dient und der andere Bereich der Abfuhr des Filtrats aus der Vorrichtung, Durch die Ausgestaltung in Funktionseinheiten läßt sich die Filtervorrichtung in Abhängigkeit der Filtrationsaufgabe frei zusammenstellen und an die jeweilige Gegebenheit anpassen. Unterstützt wird dies durch die Aufteilung in verschiedene Funktionsbereiche, die im übrigen das gewünschte An- und Abströmverhalten begünstigen.

Zwischen den Filterscheiben sind drainierende Stützkörper, insbesondere in Form von Stützscheiben vorhanden, die von den jeweiligen Filtrat- und Unfiltratkanälen aus in radialer Richtung Fluidleitwege ausbilden, die über Stege zumindest teilweise voneinander räumlich getrennt sind. Die genannten Stege wirken der Biegebeanspruchung der einzelnen Filterscheiben während des Filtrationsvorganges entgegen und stützen diese somit wirksam ab. Des weiteren ermöglichen die in radialer Richtung verlaufenden Fluidleitwege eine verbesserte Strömungsführung und Einleitung des zu filtrierenden Mediums ohne große Umlenkungen.

Bei einer weiteren bevorzugten Ausführungsform der erfindungsgemäßen Filtervorrichtung ist die Abdichteinrichtung aus Teilen der Filterscheiben und/oder Stützscheiben als Gehäuse gebildet oder besteht aus Gehäuseteilen, die mit einem Dichtmantel die Außenumfangsseite von Filterscheiben und Stützscheiben-umfassen, wobei die Gehäuseteile in radialer Richtung abstandsfrei zumindest die Filterscheiben umgeben. Somit besteht die Möglichkeit, das Filtermodul mit den Filterscheiben und den Stützscheiben ausschließlich zu realisieren, beispielsweise indem diese randseitig miteinander verklebt werden, oder man versieht die genannten Scheiben außenumfangsseitig mit einem Gehäuse, das beispielsweise aus einem thermoplastischen Kunststoff bestehend auf den Modulstapel auch aufspritzbar ist. Die Umspritzung des Filtermoduls ist mithin nur möglich, da die Unfiltratverteilung und Filtratsammlung über das Modulzentrum nebst den dort verlaufenden Kanälen erfolgt. Über das genannte Außenumfangsgehäuse lassen sich auch der Filterstapel mit den Filterscheiben und drainierenden Schichten derart verpressen, daß eine kompakte Kapselung erhalten ist sowie eine sichere mechanische Befestigung, was das Einbringen hoher Drücke und Druckstöße bei der Filtration erlaubt. Vorzugsweise kann dabei der genannte Dichtungsmantel ein- oder mehrteilig ausgebildet sein.

Bei einer weiteren bevorzugten Ausführungsform der erfindungsgemäßen Filtervorrichtung weisen die jeweiligen Funktionseinheiten unterschiedliche Filterfeinheitsgrade auf, wobei die Funktionseinheit mit dem höheren Filterfeinheitsgrad der Funktionseinheit mit dem jeweils niedrigeren Filterfeinheitsgrad in Fluidrichtung nachgeschaltet ist. Somit ist dem Grunde nach neben einer Grobfiltration auch eine nachgeschaltete Feinfiltration mit nur einer Filtervorrichtung möglich.

Weitere vorteilhafte Ausführungsformen sind Gegenstand der sonstigen Unteransprüche.

Im folgenden wird die erfindungsgemäße Filtervorrichtung anhand der Zeichnung näher erläutert. Dabei zeigen in prinzipieller und nicht maßstäblicher Darstellung die
- Fig.1: einen Längsschnitt durch eine erste Ausführungsform der Filtervorrichtung;
- Fig.2: eine Draufsicht auf eine drainierende Stützscheibe, wie sie bei der Filtervorrichtung nach der Fig.1 eingesetzt ist;
- Fig.3a,b: eine Draufsicht auf die Verteileinrichtung wie in Fig.2 verwendet bzw. einen Schnitt längs der Linie I - I in Fig.3a;
- Fig.4: eine geänderte Ausführungsform der Filtervorrichtung nach den Fig.1 bis 3, bei der zwei verschiedene Funktionseinheiten zu einem Stapelfilter zusammengefaßt sind.

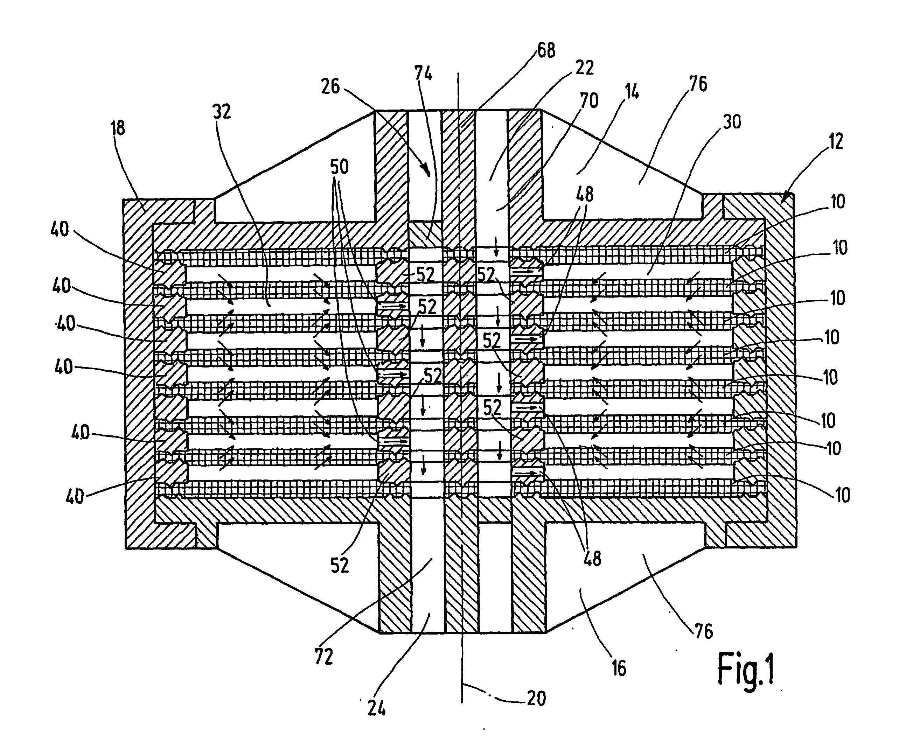

Die Filtervorrichtung nach der Fig.1 betrifft einen Stapelfilter, bestehend aus einzelnen, übereinander angeordneten und Filtermaterialien bzw. Filtermedien aufweisenden Filterscheiben 10. Bei der Ausführungsform nach der Fig.1 sind acht Filterscheiben 10 übereinander als Stapelfilter angeordnet. Die genannten Filterscheiben 10 sind von einem als Ganzes mit 12 bezeichneten Gehäuse umgeben. Das Gehäuse besteht aus einem oberen Deckelteil 14 und einem zuunterst angeordneten Bodenteil 16. Des weiteren umgreift ein zylindrischer Gehäusemantel 18 die genannten Filterscheiben 10 und umfaßt entlang seiner beiden Außenränder klammerartig die jeweiligen Oberseiten von Deckelteil 14 und Bodenteil 16.

Innerhalb der genannten Vorrichtung verlaufen parallel zu deren Mittenlängsachse 20 in der Filtervorrichtung ein diese durchgreifender Unfiltratkanal 22 sowie ein Filtratkanal 24. Die Fluidzufuhr sowie die Fluidabfuhr innerhalb der Vorrichtung ist in der Fig.1 mit Pfeildarstellungen wiedergegeben. Der Unfiltratkanal 22 ist vom Filtratkanal 24 räumlich getrennt und beide Kanäle 22,24 durchgreifen die zugehörigen Filterscheiben 10 in Richtung der Mittenlängsachse 20 der Filtervorrichtung. Der Unfiltratkanal 22 dient der Zufuhr des Unfiltrats an die jeweilige Filterscheibe 10 und nach Passieren des Filtermaterials bzw. des Filtermediums des jeweiligen scheibenartigen Filterkörpers wird das derart abgereinigte Filtrat über den Filtratkanal 24 zu seiner weiteren Verwendung aus der Filtervorrichtung abgeführt. Die erfindungsgemäße Filtervorrichtung benötigt mindestens einen Unfiltratkanal 22 und einen Filtratkanal 24; es sind jedoch auch Ausführungsformen denkbar, bei denen mehrere derartige Kanäle in einer Vorrichtung aufgenommen sind und den Verteilvorgang und die Fluidführung veranlassen. Unfiltratkanal 22 und Filtratkanal 24 sind Teile einer als Ganzes mit 26 bezeichneten Fluidführungseinrichtung, die dem Transport des zu filtrierenden Mediums beispielsweise in Form von Bier, Wein, Fruchtsäften od. dgl. sowie von pharmazeutischen und chemischen Fluiden innerhalb der Vorrichtung dient. Des weiteren bildet das genannte Gehäuse mit seinen Teilen eine als Ganzes mit 28 bezeichnete Abdichteinrichtung aus, die insbesondere dazu dient, die Filtratseite von der Unfiltratseite der Filtervorrichtung dichtend zu trennen.

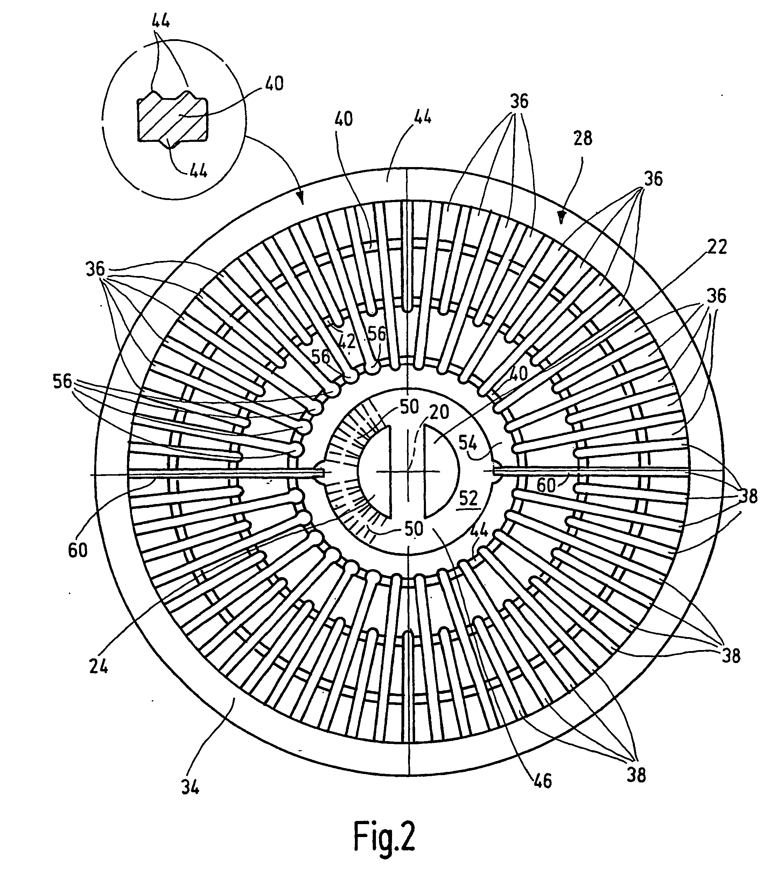

Die in der Fig.1 gezeigten einzelnen Filterscheiben 10 sind zu einer Funktionseinheit mit vorgebbarer Filtrationsleistung zusammengefaßt, wobei, wie dargestellt, der jeweilige Filtratkanal 24 und der Unfiltratkanal 22 die Funktionseinheit in mindestens zwei verschiedene Funktionsbereiche 30,32 aufteilt, von denen einer 30 der Verteilung des Unfiltrats an die Filterscheiben 10 dient und der andere Bereich 32 der Abfuhr des Filtrats aus der Vorrichtung. Zwischen den Filterscheiben 10 sind bis auf die endseitig angeordneten Filterscheiben 10, die in Anlage sind mit dem Deckelteil 14 bzw. Bodenteil 16, drainierende Stützkörper, insbesondere in Form von Stützscheiben 34 angeordnet. Eine dahingehende Stützscheibe 34 ist in Draufsicht in der Fig.2 dargestellt. Die Stützscheiben 34 bilden von dem Filtratkanal 24 und dem Unfiltratkanal 22 aus in radialer Richtung einzelne Fluidleitwege 36 aus, die über Stege 38 zumindest teilweise räumlich voneinander getrennt sind. An ihren freien Enden sind die Stege 38 jeweils über Querrippen 40 miteinander verbunden, wobei weitere ringartige Querrippen 42 eine Mittenabstützung für die einzelnen, insbesondere teilweise verkürzten Stege 38 bieten. Wie die Fig.2 zeigt, sind nämlich die einzelnen Stege 38 unterschiedlich lang und in alternierender Reihenfolge wechseln sich kürzere Stege 38 mit länger ausgeführten Stegen 38 ab. Die zuäußerst angeordnete Querrippe 40 ist gleichzeitig Bestandteil der bereits genannten Abdichteinrichtung 28 und weist entlang ihrer beiden gegenüberliegenden Seiten Vorstände 44 auf, die in dichtender Anlage verpreßbar sind mit den nachgiebigen Ober- und Unterseiten der jeweiligen Filterscheibe 10 mit ihrem Filtermediurn (vgl. Fig.1). Die randseitige Querrippe 40 mit ihren Vorständen 44 bildet somit eine wulstartige Abdichtstelle der Stützscheibe 34 aus und die genannten Stege 38 sowie die weiteren Querrippen 42 verlaufen mit Rücksprung in der hierdurch gebildeten Radialebene.

Die in Stapelfolge hintereinander angeordneten, einen Abstand zwischen sich aufweisenden Filterscheiben 10 sind als sog. Gleichteile ausgebildet, d.h. sie bauen konstruktiv gleich auf, wobei jedoch auch bei einer derart gleich ausgebildeten Filterscheibe 10 in Abhängigkeit der Filtrationsaufgabe das eingesetzte Filtermaterial bzw. das Filtermedium ein anderes sein kann. Sofern man die hintereinander angeordneten Filterscheiben 10 um 180° zur Längsachse 20 oder quer dazu gedreht fluchtend miteinander stapelt, ergibt sich die gewünschte noch näher zu beschreibende Funktionseinheit für die Filtervorrichtung. Die genannten Stützscheiben 34 hingegen sind allesamt gleich ausgebildet, können jedoch innerhalb ihres integralen Aufbaus auch noch unterschiedlich aufgebaut sein, was im folgenden noch näher dargelegt werden wird.

Wie die Fig.2 des weiteren zeigt, ist die jeweilige Stützscheibe 34 mittig mit einer Verteileinrichtung 46 versehen, die einen Teil der beiden Kanäle 22,24 bildet. Die Verteileinrichtung 46 dient der Verteilung des Unfiltrats oder der Abfuhr des Filtrats und ist demgemäß in Stapelfolge wechselweise mit Eintrittsöffnungen 48 für das Unfiltrat und Austrittsöffnungen 50 für das Filtrat versehen. Die Stützscheibe 34 nach der Fig.2 zeigt dabei die Austrittsöffnungen 50 für das Filtrat und an der jeweils diametral gegenüberliegenden Seite dieser Öffnungen 50 ist die Verteileinrichtung 46 mit einem geschlossenen Wandbereich 52 versehen. Die jeweiligen Ein- und Austrittsöffnungen 48 bzw. 50 erstrecken sich von der Mittenlängsachse 20 in radialer Richtung nach außen, und zwar vom jeweiligen Kanal 22 bzw. 24 zum Freiraum 54, gebildet zwischen der Verteileinrichtung 46 und der innersten Querrippe 40 (vgl. Fig.2). Somit setzen die jeweiligen Öffnungen 48 bzw. 50 die Fluidführung vom jeweiligen Kanal 22,24 kommend fort und die freien, vom Kanal abgewandten Enden der jeweiligen Öffnung münden in den Freiraum 54 der gegenüberliegend von kugelförmigen Verstärkungen 56 der längeren Längsstege 38 begrenzt ist. Hierdurch ergibt sich eine Art Fluidgleichverteilung, die dazu führt, daß aus den Öffnungen 48,50 ausströmendes Fluid innerhalb des Freiraumes 54 auf die gegenüberliegende Hälfte der Stützscheibe 34 gebracht wird, wo im Hinblick auf den in sich geschlossenen Wandbereich 52 eine Zuströmmöglichkeit nicht besteht. Die Verstärkungen 56 sind also in alternierender Reihenfolge einmal dem einen Funktionsbereich 30 und dann dem anderen Funktionsbereich 32 zugeordnet.

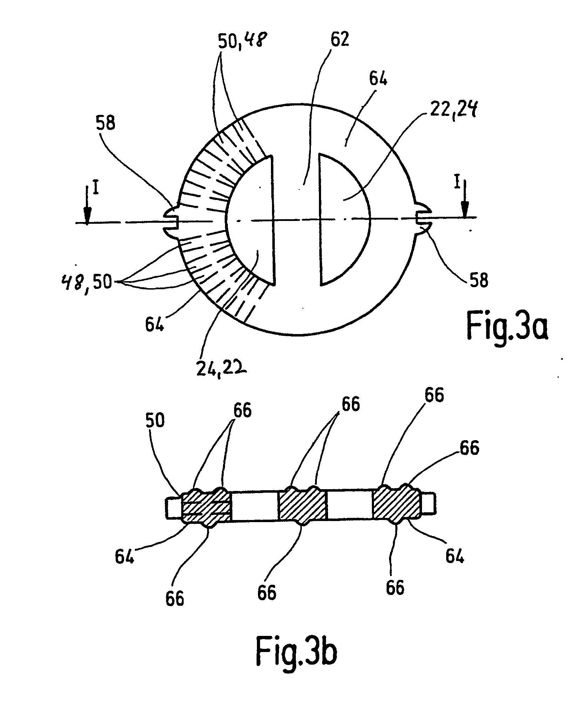

Die genannte Verteileinrichtung 46 ist, wie dies insbesondere die Fig.3a und 3b zeigen, als Verteilring ausgebildet und über zwei diametral einander gegenüberliegende Rastnasen 58 läßt sich in der Art einer Klippverbindung die lösbare Verbindung mit zwei verlängerten Stegteilen 60 der Stützscheibe 34 herstellen. Aufgrund der derart ausgebildeten ringartigen Verteileinrichtung 46 und der Stützscheibe 34 mit ihren zuordenbaren Rastteilen ist ein modulares Konzept für die drainierenden Schichten zwischen den jeweiligen Filterscheiben 10 erreicht. Wie die Fig.3a, 3b des weiteren zeigen, weist die Verteileinrichtung 46 sowohl entlang ihres Mittensteges 62, der die beiden Fluidkanäle 22,24 voneinander trennt, als auch an ihren umfangsseitigen Flankenstücken 64 Dichtnocken 66 auf, die als Teil der Abdichteinrichtung die Filtrat- von der Unfiltratseite her fluiddicht trennen, und zwar im Bereich der Zu- und Abfuhr des Unfiltrats sowie des Filtrats und im Bereich der genannten Kanäle 22,24.

Wie das Schnittbild nach der Fig.3b verdeutlicht, verlaufen die genannten Öffnungen 48,50 innerhalb des Mittenhorizontes der jeweiligen ringförmigen Verteileinrichtung 46. Die genannten Dichtnocken 66 greifen dabei als Teil der Abdichteinrichtung 28 wiederum dichtend in die Ober- und Unterseite der benachbart zugeordneten Filterscheiben 10 ein und stellen derart über das nachgiebige Filtermaterial die Abdichtung sicher. Die Abdichteinrichtung 28 besteht also aus Teilen der Filterscheiben 10 und der Stützscheiben 34 sowie aus den Gehäuseteilen, insbesondere in Form des Gehäusemantels 18, der dichtend die Außenumfangsseiten von Filterscheiben 10 und Stützscheiben 34 umgibt. Mithin legt sich der Gehäusemantel 18 abstandsfrei an den Außenumfang des Filtermoduls bzw. des Stapelfilters an. Der Gehäuse- oder Dichtungsmantel 18 kann gemäß der Darstellung nach der Fig.1 einteilig ausgeführt sein; es besteht aber auch die Möglichkeit einer mehrteiligen, insbesondere hälftigen Ausbildung mit einem Gehäuseober- und einem Gehäuseunterteil, die dann entsprechend miteinander zu verbinden sind.

Das Filtermodul ist also im Stapel derart angeordnet, daß in der gezeigten Stapelfolge (vgl. Fig.1) jede zweite drainierende Stützscheibe 24 das Unfiltrat führt und die drainierenden, dazwischen liegenden Stützscheiben 34 das Filtrat sammeln. Um dies zu erreichen, wird jedes zweite drainierende Stützscheibenelement 34 um 180° um den Umfang zur Mittenlängsachse 20 der Vorrichtung verschwenkt eingebaut. Die Fig.1 veranschaulicht diesen Aufbau, wobei der in Blickrichtung auf die Fig.1 gesehene rechte Kanal 22 das Unfiltrat führt und der linke Kanal 24 das Filtrat. Liegt der zentrale Verteilerring der Verteileinrichtung 46 mit den Eintrittsöffnungen 48 in Blickrichtung gesehen nach rechts, erhält man also ein Unfiltrat führendes drainierendes Abstandselement als Stützscheibe 34 und um 180° gedreht, liegen die Bohrungen 50 auf der linken Kanalseite als Filtratkanal 24 und man erhält ein filtratführendes Stützscheibenelement 34, das mit dem genannten Filtratkanal 34 fluidführend in Verbindung steht.

Die Anströmung des jeweiligen Drainage- oder Stützscheibenkörpers 34 erfolgt also nicht umlaufend, sondern einseitig. Um dennoch eine gleichmäßige Anströmung zu erreichen, weist die Stützscheibe um den zentralen Verteilerring herum eine Zone auf, die den Freiraum 54 bildet und die frei ist von den radialen Stützrippen 40,42 und Steg 38. Die Querrippen 40,42 sind im Durchmesser reduziert, so daß sich das Filtermaterial der Filterscheiben 10 vornehmlich auf den Stegen 38 abstützt. Zwischen den umlaufenden Rippen 40 und der jeweiligen Filterschicht muß ein freier durchströmbarer Querschnitt erhalten bleiben. Auf die obere und untere Filterschicht des Moduls aus alterniert gestapelten Filterschichten als Filterscheiben 10 und drainierenden Abstandselementen in Form der Stützscheiben 34 wird je eine Abschlußplatte in Form des Deckelteils 14 und des Bodenteils 16 gesetzt. Die jeweilige Abschlußplatte weist zwei durch einen. Trennsteg 68 getrennte Ausschnitte auf, die der Geometrie der Kanalführungen im Querschnitt entsprechen und bei der Stapelung deckungsgleich auf den Kanalöffnungen der Kanäle 22,24 liegen.

Je nachdem, ob die Anschlüsse 70,72 für Ein- und Auslauf an einer Abschlußplatte 14,16 angebracht werden sollen oder sich an den Endplatten selbst gegenüberliegen, können mit einem Verschlußstopfen 74 die jeweilige Kanalöffnung der Kanäle 22 und/oder 24 verschlossen werden. Setzt man den Verschlußstopfen 74, wie in der Fig.1 gezeigt, im Bereich des Deckelteils 14 zum Verschluß des Filtratkanals 24 ein, ergibt sich die gewünschte Fluidführung, daß das Unfiltrat über das Deckelteil 14 einströmt und über das Bodenteil 16 die Filtervorrichtung als Filtrat verläßt. Werden bei einer nicht näher dargestellten Ausführungsform zwei Verschlußstopfen (nicht dargestellt) im Bodenteil 16 sowohl im Filtratkanal 24 als auch im Unfiltratkanal 22 eingesetzt, besteht die Möglichkeit, sowohl den Unfiltratstrom als auch den Filtratstrom voneinander fluidführend getrennt über das Deckelteil 14 zu- bzw. abzuführen. An dem Deckelteil 14 und an dem Bodenteil 16 lassen sich Adapterstege od. dgl. anbringen, die angeschweißt, angeklebt, angerastet oder angeschraubt dem Einsatz der Filtervorrichtung in gesamtkonzeptionellen Filtersystemen und Filtermaschinen dienen. Insbesondere bilden die dahingehenden Adapter eine Verrippung 76 aus, die die gesamte Filtervorrichtung an ihren freien gegenüberliegenden Enden derart aussteift, daß hohe Druckkräfte während der Filtration in die Vorrichtung einleitbar sind.

Zur Endkonfektionierung des gezeigten Moduls wird der gesamte Stapel mit den Abschlußplatten in eine Spritzgußform (nicht dargestellt) eingelegt. Beim Schließen der Spritzgußform wird der Gesamtstapel verpreßt und alle genannten Dichtkonturen drücken sich in die Filterschichten bzw. die Filtermedien. Im vorliegenden Fall kann die Verpreßkraft deutlich reduziert werden, und zwar dadurch, daß der gesamte Filterstapel im Bereich des zentralen Verteilerringes der Verteileinrichtung 46 durch Verpressung abzudichten ist. Der größere Außendurchmesser der Gesamtvorrichtung muß nur schwach vorgepreßt werden, da die eigentliche Dichtwirkung durch die Umspritzung des gesamten Stapelfilters in der Spritzgußform erreicht wird, bei der der Gehäusemantel 18 entsteht. Der hohe Verpreßzustand im Bereich des zentralen Verteilerringes und der schwache Verpreßzustand im Bereich des jeweiligen Außenringes als äußere Querrippe 40 wird vorzugsweise dadurch erreicht, daß die zentralen Verteilerringe der Verteileinrichtung 46 ein größeres Dickenmaß aufweisen als die zuordenbaren Außenringe mit ihren Vorständen 44 der jeweiligen Stützscheibe 34. Die Kraftschlußflächen zwischen den Abschlußplatten in Form von Deckelteil 14 und Bodenteil 16 und der Spritzgußform sind im wesentlichen bündig und eben verlaufend und erlauben somit ein hohes Maß an Krafteinleitung. Der genannte Gehäusemantel 18 ist vorzugsweise aus einem thermoplastischen Kunststoff bestehend um den Modulstapel gespritzt. Der Werkstoff von Deckelteil 14 und Bodenteil 16 ist dabei idealerweise identisch mit dem derart eingesetzten thermoplastischen Kunststoffmaterial. So ist sichergestellt, daß die Umspritzung an den Abschlußplatten anbindet und verschmilzt. Eine dahingehende Umspritzung des Stapelfilters ist nur möglich, da die Unfiltratverteilung und Filtratsammlung über das Modulzentrurn mit den einzelnen Filterscheiben 10 erfolgt.

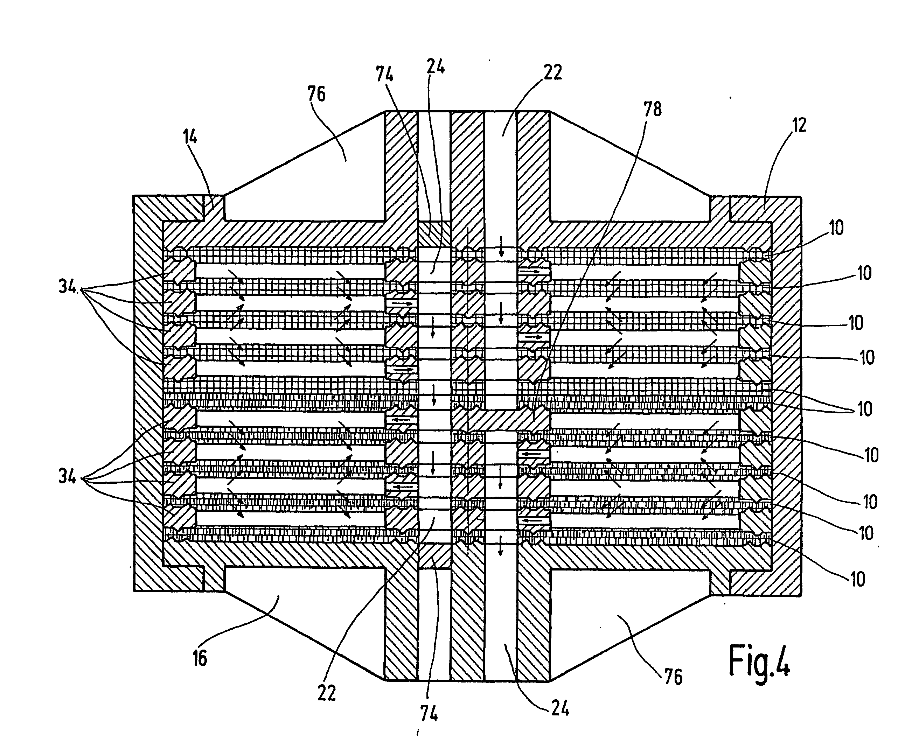

Wie die Fig.4 zeigt, kann der beschriebene Stapelfilter auf einfache Art und Weise auf eine mehrstufige Filtration ausgebaut werden. Dafür wird ein modifizierter zentraler Verteilerring 78 benötigt, bei dem der umlaufend abgedichtete Kanal des zentralen Verteilerringes geschlossen wird, und zwar an der Stelle des Überganges von Unfiltratkanal 22 der einen Funktionseinheit zum Filtratkanal 24 der anderen nachfolgenden Funktionseinheit. In Fluidrichtung ist dabei die erste Filterstufe aus den Filterschichten oder Filterscheiben mit der geringeren Filterfeinheit aufgebaut, wobei die dahingehend erste Filterstufe mit einer entsprechenden Filterschicht endet. Die zweite Filtrations- oder Funktionsstufe beginnt dann mit einer Filterschicht der höheren Filterfeinheit, so daß am Übergang der Funktionsstufen zwei Filterschichten aufeinander zu liegen kommen. Nach der ersten Filterschicht der zweiten Filtrationsstufe wird der zentrale Verteilerring für die Doppelfiltration so eingebaut, daß seine Einströmöffnungen 48 in die gleiche Richtung weisen wie beim letzten Verteilerring der ersten Filtratstufe. Danach erfolgt die Stapelung der zweiten Filtratstufe wie bereits beschrieben. Es sind mithin beliebig viele Filterstufen und Filterfeinheiten in Reihe denkbar. Die Endplatten und mithin das Deckelteil 14 sowie das Bodenteil 16 werden so vorbereitet, daß jeweils eine Kanalöffnung mit einem Stopfen verschlossen ist (vgl. Anordnung gemäß Fig.4). Ferner ist es möglich, ein Harz oder einen Klebstoff in das schon gekapselte Modul einzuspritzen, um derart die Dichtfunktion zu erhöhen. Vorzugsweise wird dabei eine geeignete Einspritzöffnung (nicht dargestellt) in dem Gehäusemantel 18 vorgesehen und das dahingehende Dichtmittel dringt dann in einen schmalen Spalt zwischen Gehäuseschale und Schichtenstapel und füllt diesen derart vollständig aus. Die Dichtfunktion wird dann durch die anschließende Versiegelung der Schichtenaußenränder erreicht.

Die kompakte Anordnung als Modulstapel und die jeweilige Abstützung der Filtermedien über die Stützscheiben 34 ermöglicht auch eine Rückspülung durchzuführen, bei der in umgekehrter Fluidrichtung die Filterscheiben 10 über das Filtrat von Verunreinigungen abgereinigt werden.

Der in der Fig.3a gezeigte Ring kann auch durch ein anderes, vorzugsweise symmetrisch aufgebautes Bauteil ersetzt oder gebildet sein. Eine dahingehende Verteileinrichtung sollte im Sinne eines Gleichteils immer derart aufgebaut sein, daß durch eine Drehung um 180° die zwei vorstehend beschriebenen Funktionen realisierbar sind. Ferner kann der gezeigte Ring oder die Verteileinrichtung aus mehreren Segmenten zusammengesetzt sein. Wird der in Fig.3a gezeigte Ring senkrecht zu der Linie I - I mittig in zwei Hälften geteilt, kann die dahingehende Hälfte immer gleich aufgebaut sein und muß nur zu der jeweils anderen einen Ring bildenden Hälfte um 180° verschwenkt werden, um den in Fig.3a gezeigten Ring zu bilden. Dergestalt läßt sich mit nur einem Ringsegment die Ringanordnung nach der Fig.3a erreichen.

Bei der gezeigten Ausführungsform ist das Gehäuse 12 vorzugsweise abstandsfrei um die Filterscheibenanordnung geführt. Bei einer nicht näher dargestellten Ausführungsform wäre es jedoch auch denkbar, das dahingehende Gehäuse unter Abstand um die Filterscheiben 10 herumzuführen und dergestalt von der Seite her eine Einströmmöglichkeit zu gewährleisten. Mit der erfindungsgemäßen Filtervorrichtung ist jedenfalls erreicht, daß die Filterfläche optimiert ist zu dem für sie benötigten Einbauraum innerhalb des Gehäuses 12.

## Patentansprüche

1. Filtervorrichtung, insbesondere Stapelfilter, bestehend aus einzelnen übereinander angeordneten und Filtermaterialien aufweisenden Filterscheiben (10), die zumindest von Teilen eines Gehäuses (12) umgeben sind, mit mindestens einem Unfiltratkanal (22) sowie mindestens einem Filtratkanal (24), wobei letzterer als Teil einer Fluidführungseinrichtung (26) zum Abführen des Filtrates an die Filtratseite der Filterscheiben (10) angeschlossen ist und diese durchgreift, wobei die Filtermaterialien der Filterscheiben (10) von einer Abdichteinrichtung (28) derart begrenzt sind, daß zumindest entlang ihres Außenumfanges die Filtratseite von der Unfiltratseite dichtend getrennt ist, wobei der jeweilige Unfiltratkanal (22) vom jeweiligen Filtratkanal (24) räumlich getrennt gleichfalls die zugehörigen Filterscheiben (10) durchgreift, wobei der jeweilige Filtrat(24)- und Unfiltratkanal (22) parallel zur Längsachse (20) der Vorrichtung orientiert die Filter-(10) und Stützscheiben (34) durchgreifen, wobei eine Verteileinrichtung (46) für die Unfiltrat- und Filtratführung mittig die jeweiligen Filter-(10) und Stützscheiben (34) durchgreift, wobei die Verteileinrichtung (46) den jeweiligen Filtrat-(24) und Unfiltratkanal (22) derart integrierend aufnimmt, daß in alternierender Reihenfolge die Verteileinrichtung (46) zur Verteilung des Unfiltrats oder Abfuhr des Filtrats mit Eintritts- bzw. Austrittsöffnungen (48,50) versehen ist, wobei die Verteileinrichtung (46) auf der jeweils diametral gegenüberliegenden Seite dieser Öffnungen (48,50) mit einem geschlossenen Wandbereich (52) versehen ist und wobei zwischen den Filterscheiben (10) drainierende Stützkörper, insbesondere in Form von Stützscheiben (34) vorhanden sind, die von den jeweiligen Filtrat-und Unfiltratkanälen (22,24) aus in radialer Richtung Fluidleitwege (36) ausbilden, die über Stege (38) zumindest teilweise voneinander räumlich getrennt sind, **dadurch gekennzeichnet, daß** die Abdichteinrichtung (28) in der Art eines Gehäuses (12) fluiddicht sowohl die Filterscheiben (10) als auch die Abstände zwischen denselben begrenzt und daß in Stapelfolge die hintereinander angeordneten Filterscheiben (10) von den Stützscheiben (34) voneinander getrennt als Gleichteile ausgebildet, um 180° zur Längsachse (20) oder quer dazu gedreht fluchtend miteinander unter der Bildung der Funktionseinheit angeordnet sind.

2. Filtervorrichtung nach Anspruch 1, **dadurch gekennzeichnet, daß** die einzelnen Filterscheiben (10) zu einer Funktionseinheit mit vorgebbarer Filtrationsleistung zusammengefaßt sind und daß der jeweilige Filtrat-(24) und der Unfiltratkanal (22) die Funktionseinheit in mindestens zwei verschiedene Funktionsbereiche (30,32) aufteilen, von denen einer (30) der Verteilung des Unfiltrats an die Filterscheiben (10) dient und der andere Bereich (32) der Abfuhr des Filtrats aus der Vorrichtung.

3. Filtervorrichtung nach Anspruch 1 oder 2, **dadurch gekennzeichnet, daß** die Abdichteinrichtung (28) aus Teilen der Filterscheiben (10) und/oder Stützscheiben (34) als Gehäuse (12) gebildet sind und/oder aus Gehäuseteilen bestehen, die mit einem Dichtmantel (18) die Außenumfangsseite von Filterscheiben (10) und Stützscheiben (34) umfassen, daß die Gehäuseteile in radialer Richtung abstandsfrei zumindest die Filterscheiben (10) umgeben.

4. Filtervorrichtung nach Anspruch 3, **dadurch gekennzeichnet, daß** der Dichtungsmantel (18) ein- oder mehrteilig ausgebildet ist und insbesondere aus Kunststoffmaterialien besteht, die über ein Spritzgußverfahren auftragbar sind.

5. Filtervorrichtung nach einem der Ansprüche 1 bis 4, **dadurch gekennzeichnet, daß** die jeweiligen Funktionseinheiten unterschiedliche Filterfeinheitsgrade aufweisen und daß die Funktionseinheit mit dem höheren Filterfeinheitsgrad der Funktionseinheit mit dem jeweils niedrigeren Filterfeinheitsgrad in Fluidrichtung nachgeschaltet ist.

6. Filtervorrichtung nach einem der Ansprüche 1 bis 5, **dadurch gekennzeichnet, daß** die Verteileinrichtung (46) einen Ringkörper mit zwei hatbschalenförmigen Ausnehmungen als Teil des Filtrat-(22) bzw. Unfiltratkanals (24) aufweist und über eine Rastverbindung (58) in eine Öffnung, insbesondere Mittenöffnung der Stützscheibe (34) einsetz- und verrastbar ist.

7. Filtervorrichtung nach einem der Ansprüche 1 bis 6, **dadurch gekennzeichnet, daß** die Filterscheiben (10) an ihrem äußeren Umfangsrand von den Stützscheiben (34), die teilweise die Abdichteinrichtung (28) bilden, dichtend auf Abstand gehalten sind und an ihrem inneren Umfangsrand über die Ringkörper der Verteileinrichtung (46) die gleicher maßen Bestandteil der Abdichteinrichtung sind.

## Claims

1. Filter device, especially stack filter, consisting of individual filter discs (10) positioned on top of one another and incorporating filter material, which are surrounded by at least parts of a housing (12), with at least one unfiltrate channel (22) as well as at least one filtrate channel (24), whereby the latter is connected to the same as part of a fluid guidance means (26) for draining of the filtrate onto the filtrate side of the filter discs (10) and engages the same, whereby the filter material of the filter discs (10) are defined by a sealing means (28) in such a way that the filtrate side is sealingly separated from the unfiltrate side at least along its outer circumference, whereby the relevant unfiltrate channel (22) is spatially separated from the relevant filtrate channel (24) and also engages the associated filter discs (10), whereby the relevant filtrate (24) and unfiltrate channel (22) extends parallel to the longitudinal axis (20) of the device and orientatingly engages the filter (10) and support discs (34), whereby a distribution device (46) for unfiltrate and filtrate guidance centrally engages the relevant filter (10) and support discs (34), whereby the distribution device (46) receives the relevant filtrate (24) and unfiltrate channel (22) in an integrated way, so that the distribution device (46) for the distribution of the unfiltrate or draining of the filtrate is equipped with inlet, i.e. outlet ports (48, 50) in alternating sequence, whereby the distribution device (46) is equipped with a closed wall section (52) on the relevant diametrically opposite side of these ports (48, 50), and whereby draining support bodies, especially in the form of support discs (34) are provided between the filter discs (10), the same extending fluid guidance paths (36) from the relevant filtrate and unfiltrate channels (22, 24) in a radial direction, which are spatially separated from one another by bridges (38) at least in part, **characterised in that** the sealing means (28) is fluid tight in the way of a housing (12) and **in that** the filter discs (10) as well as the gaps between the same are limited, and **in that** the stack sequence separates the filter discs (10) arranged one behind the other from the support discs (34) in the way of identical parts, and **in that** the same are positioned at 180° in relation to the longitudinal axis (20), or transversely twisted away from the same whilst forming a functional unit.

2. Filter device according to Claim 1, **characterised in that** the individual filter discs (10) are incorporated into a functional unit with pre-determinable filtration performance, and **in that** the relevant filtrate (24) and unfiltrate channels (22) separate the functional unit into at least two different functional areas (30, 32), of which one (30) serves to distribute the unfiltrate to the filter discs (10), and the other area (32) serves to drain the filtrate from the device.

3. Filter device according to Claim 1 or 2, **characterised in that** the sealing means (28) is formed by parts of the filter discs (10) and/or support discs (34) in the form of a housing (12) and/or consists of housing components, which enclose the outer circumference side of the filter discs (10) and support discs (34) together with a sealing sleeve (18), and **in that** the housing components surround at least the filter discs (10) in a radial direction without gaps.

4. Filter device according to Claim 3, **characterised in that** the sealing sleeve (18) consists of one or several pieces, and especially of plastic materials, which can be affixed by means of an injection moulding process.

5. Filter device according to one of the Claims 1 to 4, **characterised in that** the relevant functional units incorporate different filter mesh sizes, and **in that** the functional unit with the greatest filter mesh size of the functional unit is positioned prior to the relevant smallest filter mesh size in fluid direction.

6. Filter device according to one of the Claims 1 to 5, **characterised in that** the distribution device (46) incorporates an annular body with two half-bowl shaped recesses as part of the filtrate (22), i.e. unfiltrate channel (24) and can be inserted into and arrested within an opening, especially a central opening of the support disc (34), by means of an arresting connection (58).

7. Filter device according to one of the Claims 1 to 6, **characterised in that** the filter discs (10) are sealingly held at a distance around their outer circumference edge by the support discs (34) which form a part of the sealing means (28), and form a part of the sealing means around their inner circumference edge by means of the annular body of the distribution device (46) in the same way.

## Revendications

1. Dispositif de filtration, en particulier de filtre empilé, se composant de différents disques filtrants (10) disposés les uns au-dessus des autres et comportant des matériaux filtrants, qui sont entourés au moins de parties d'un corps (12), avec au moins un canal de non-filtrat (22) ainsi qu'au moins un canal de filtrat (24), sachant que ce dernier est raccordé comme partie d'un dispositif de circulation du fluide (26) pour évacuer le filtrat sur la face filtrat des disques filtrants (10) et qu'il traverse celle-ci, sachant que les matériaux filtrants des disques filtrants (10) sont limités par un dispositif d'étanchéité (28) de façon à ce qu'au moins le long de son pourtour extérieur la face filtrat soit séparée de la face non-filtrat de manière étanche, sachant que chaque canal de non-filtrat (22) séparé dans l'espace de chaque canal de filtrat (24) traverse également les disques filtrants (10) correspondants, sachant que chaque canal de filtrat (24) et de non-filtrat (22) traversent parallèlement à l'axe longitudinal (20) de manière orientée vers le dispositif les disques filtrants (10) et les disques d'appui (34), sachant qu'un dispositif de répartition (46) pour la circulation du non-filtrat et du filtrat traverse au milieu les disques filtrants (10) et les disques d'appui (34) respectifs, sachant que le dispositif de répartition (46) loge chaque canal de filtrat (24) et de non-filtrat (22) de manière intégrante de façon à ce qu'en alternance le dispositif de répartition (46) soit équipé pour la répartition du non-filtrat ou pour l'évacuation du filtrat d'ouvertures d'entrée et de sortie (48, 50), sachant que le dispositif de répartition (46) est équipé sur chaque face diamétralement opposée de ces ouvertures (48, 50) d'une zone de paroi (52) fermée et sachant que sont présents entre les disques filtrants (10), des corps d'appui drainant, en particulier sous la forme de disques d'appui (34) qui constituent à partir de chaque canal de filtrat et de non-filtrat (22, 24) en direction radiale des voies de circulation du fluide (36), qui sont séparées dans l'espace au moins partiellement les unes des autres par des traverses (38), **caractérisé en ce que** le dispositif d'étanchéité (28) limite à la manière d'un corps (12) de manière étanche au fluide aussi bien les disques filtrants (10) que les espacements entre ceux-ci et **en ce que** dans l'ordre d'empilage les disques filtrants (10) disposés les uns derrière les autres séparés par les disques d'appui (34) les uns des autres sont conçus comme des pièces identiques, placés à 180° par rapport à l'axe longitudinal (20) ou tournés en oblique par rapport à lui en ligne les uns avec les autres formant l'unité de fonctionnement.

2. Dispositif de filtration selon la revendication 1, **caractérisé en ce que** les différents disques filtrants (10) sont regroupés pour former une unité de fonctionnement avec une capacité de filtration spécifiable et **en ce que** chaque canal de filtrat (24) et chaque canal de non-filtrat (22) divisent l'unité de fonctionnement en deux zones de fonctionnement différentes au moins (30, 32), dont l'une (30) sert à la distribution du non-filtrat sur les disques filtrants (10) et l'autre zone (32) sert à l'évacuation du filtrat hors du dispositif.

3. Dispositif de filtration selon la revendication 1 ou 2, **caractérisé en ce que** le dispositif d'étanchéité (28) est conçu à partir de parties des disques filtrants (10) et/ou des disques d'appui (34) comme corps (12) et/ou se compose de parties de corps qui entourent avec une enveloppe étanche (18) la face du pourtour extérieur des disques filtrants (10) et des disques d'appui (34), **en ce que** les parties de corps entourent en direction radiale sans espacement les disques filtrants (10) au moins.

4. Dispositif de filtration selon la revendication 3, **caractérisé en ce que** l'enveloppe étanche (18) est conçue en une ou plusieurs parties et en particulier en matières synthétiques qui peuvent être appliquées par procédé de moulage par injection.

5. Dispositif de filtration selon l'une quelconque des revendications 1 à 4, **caractérisé en ce que** les unités de fonctionnement respectives comportent des degrés différents de finesse de filtration et **en ce que** l'unité de fonctionnement avec le degré de finesse de filtration le plus fin est placée, en direction du fluide, en aval de l'unité de fonctionnement avec le degré de finesse de filtration le plus bas.

6. Dispositif de filtration selon l'une quelconque des revendications 1 à 5, **caractérisé en ce que** le dispositif de répartition (46) comporte un corps annulaire avec deux évidements en forme de demi-coque comme partie du canal de filtrat (22) ou de non-filtrat (24) et peut être inséré et encranté par un assemblage à cran (58) dans une ouverture, en particulier une ouverture centrale du disque d'appui (34).

7. Dispositif de filtration selon l'une quelconque des revendications 1 à 6, **caractérisé en ce que** les disques filtrants (10) sont maintenus espacés de manière étanche sur leur bord périphérique extérieur par les disques d'appui (34) qui forment en partie le dispositif d'étanchéité (28) et constituent sur leur bord périphérique intérieur par les corps annulaires du dispositif de répartition (46) les mêmes composants du dispositif d'étanchéité.
